(19) Europäisches Patentamt
European Patent Office
Office européen des brevets

(11) Numéro de publication: **0 277 444 B1**

(12) **FASCICULE DE BREVET EUROPEEN**

(45) Date de publication de fascicule du brevet:
02.10.91

(51) Int. Cl.⁵: **B23K 26/02**

(21) Numéro de dépôt: **87402961.4**

(22) Date de dépôt: **22.12.87**

(54) **Machine à micro faisceau laser d'intervention sur des objets à couches minces de matériau.**

(30) Priorité: **23.12.86 FR 8618079**

(43) Date de publication de la demande:
**10.08.88 Bulletin 88/32**

(45) Mention de la délivrance du brevet:
**02.10.91 Bulletin 91/40**

(84) Etats contractants désignés:
**BE CH DE ES FR GB IT LI NL SE**

(56) Documents cités:
EP-A- 0 044 019
FR-A- 2 541 468

WESTERN ELECTRIC, no. 20, octobre 1970,
pages 19,20, New York, US; S. CHARSCHAN
et al.: "Laser scribing apparatus"

PRODUCT ENGINEERING, vol. 4-1, no. 12, 8
juin 1970, pages 87,88, New York, US;
"Building-block laser design adapts to machining jobs"

(73) Titulaire: **FRANCE TELECOM**
**6 place d'Alleray**
**F-75015 Paris(FR)**

(72) Inventeur: **Auvert, Geoffroy**
**22 Rue Barnave**
**F-38000 Grenoble(FR)**
Inventeur: **Georgel, Jean-Claude**
**Rue Alphonse Daudet**
**F-13140 Lambesc(FR)**
Inventeur: **Guern, Yves Chemin des Hermen-**
**taires**
**Quartier du Couvent, Pourrières**
**F-83470 Saint Maximin Sainte Baume(FR)**

(74) Mandataire: **Ramey, Daniel**
**Cabinet Ores 6 Avenue de Messine**
**F-75008 Paris(FR)**

Rank Xerox (UK) Business Services

## Description

L'invention concerne une machine à microfaisceau laser d'intervention sur des objets à couches minces de matériau, par exemple pour leur découpe.

On connaît déjà des machines de ce type, qui utilisent en général un laser à impulsions. Ces machines sont difficilement utilisables pour des interventions sur des circuits intégrés et sur des couches minces par exemple des couches magnétiques formées sur les têtes magnétiques des magnétoscopes ou des lecteurs de disques ou de disquettes informatiques, les intervalles de temps entre les impulsions du laser se traduisant par un refroidissement de la couche de matériau sur laquelle on opère et ne permettant pas une rapidité d'exécution et une finesse de découpe intéressantes.

On connaît par exemple par le document WESTERN ELECTRIC, n° 20, Octobre 1970, pages 19 et 20, une machine de gravure de plaquettes de silicium du type précité. Dans cette machine, un laser pulsé ayant une puissance de crête de 2kW à 5kHz permet d'évaporer la matière à graver sur une profondeur de 25 à 37 µm environ. La voie de transmission du faisceau laser est couplée à une voie d'éclairage et à une voie d'observation de l'objet à traiter.

On a également proposé d'utiliser un appareil comprenant un laser continu du type à argon couplé à un circuit optique comprenant un microscope pour focaliser le faisceau laser avec un diamètre de l'ordre du micromètre sur la surface de l'objet à traiter. Il s'agit cependant d'un appareil de laboratoire, qui nécessite des réglages extrêmement fins et délicats et qui n'est pas utilisable industriellement.

L'invention a pour objet une machine à microfaisceau laser pour intervention sur des objets à couches minces de matériau, qui offre une précision d'intervention de l'ordre du micromètre, qui puisse être utilisée de façon industrielle, qui soit automatisable et qui permette une observation précise de l'action du microfaisceau laser sur l'objet à traiter.

L'invention a encore pour objet une machine de ce type, qui puisse être utilisée non seulement pour des interventions précises sur des circuits intégrés, par exemple pour la correction de micro-défauts mais également pour une micro-analyse, une réparation et une reconfiguration de circuits intégrés et d'objets divers comprenant des couches minces de matériau, utilisés en micro-électronique par exemple.

L'invention propose à cet effet une machine à microfaisceau laser d'intervention sur des objets à couches minces de matériau, tels que des circuits intégrés, par exemple pour la découpe de ces couches minces, comprenant un laser, une voie optique de transmission de faisceau laser vers l'objet, une voie optique d'éclairage de l'objet et une voie d'observation de l'objet menant à des moyens électroniques de visualisation, ces trois voies optiques étant réunies entre elles en amont de l'objet, caractérisé en ce que le laser est un laser continu associé à des moyens de commande et de réglage de puissance pour découper avec une précision de l'ordre du micromètre une couche mince par réaction thermochimique avec une couche sous jacente et en ce que la machine comprend une platine rigide, indéformable et insensible aux vibrations, placée à la sortie du laser et sur laquelle sont fixés les composants optiques définissant les trois voies optiques précitées et comportant des moyens indépendants de réglage, ainsi qu'un objectif de microscope par lequel passent ces trois voies, celles-ci étant réunies entre elles à l'entrée du microscope par une lame dichroïque permettant une observation continue de l'action du faisceau laser sur l'objet.

Il est ainsi possible de découper une couche mince de matériau avec une précision de l'ordre du micromètre, grâce à une réaction thermochimique entre cette couche mince et une couche sous jacente et non par fusion de cette couche mince, et simultanément d'observer de façon continue, sans risque, l'action du faisceau laser sur la surface de l'objet à traiter pour guider le déplacement de ce faisceau sur toute la zone d'intervention.

Selon une autre caractéristique de l'invention, la platine précitée comprend des moyens mécaniques de positionnement précis de composants optiques, permettant de les démonter et de les remplacer sans modification du réglage optique.

On peut ainsi, très facilement et sans perte de temps, adapter la machine à une intervention d'un type déterminé.

Selon encore une autre caractéristique de l'invention, la voie d'observation sur la platine précitée comprend une caméra matricielle du type C.C.D., dont la sortie est reliée à un écran de visualisation indépendant de la platine et dont l'entrée est reliée à l'objectif d'un microscope par des filtres d'atténuation de l'image du point d'impact du faisceau laser et par des moyens optiques d'agrandissement d'image.

Le personnel peut ainsi observer de façon continue l'objet traité et l'impact réel du faisceau laser. Par ailleurs, le positionnement du faisceau laser sur l'objet à traiter peut être assuré avec une précision de l'ordre de 0,2 µm.

Selon encore une autre caractéristique de l'invention, la voie de transmission du faisceau laser sur la platine comprend un premier miroir de renvoi suivi d'un bloc optique afocal de grandissement du faisceau laser, la lame dichroïque précitée traversée par le faisceau laser, et un autre miroir de renvoi vers l'objectif de microscope.

Le premier miroir de renvoi est conjugué optiquement de la pupille d'entrée de l'objectif de microscope. Son réglage n'influence donc pas la position du faisceau laser par rapport au centre de la pupille mais uniquement la position du point d'impact du faisceau laser focalisé sur l'objet à traîter.

Avantageusement, ce premier miroir est motorisé, pour assurer par exemple un balayage du point d'impact du faisceau laser sur la surface de l'objet.

Selon une autre caractéristique de l'invention, cette voie de transmission du faisceau laser sur la platine est reliée à la sortie du laser par un autre miroir de renvoi et un isolateur optique, empêchant une réinjection du faisceau laser par la sortie du laser.

Il se peut en effet que la surface de l'objet à traîter comprenne une couche très réfléchissante, par exemple en aluminium. L'isolateur optique, qui empêche la réinjection du faisceau laser réfléchi, évite ainsi une déstablisation du laser.

Avantageusement, le miroir de renvoi associé à l'isolateur optique est conjugué optiquement de la zone visée de l'objet, pour permettre le réglage de l'impact du faisceau laser au centre de la pupille d'entrée du microscope.

Les réglages du point d'impact du faisceau laser sur la surface de l'objet à traîter et du point d'impact du faisceau laser sur la pupille d'entrée de l'objectif du microscope sont donc indépendants l'un de l'autre.

Selon une autre caractéristique de l'invention, la voie d'éclairage portée par la platine comprend un faisceau de fibres optiques dont une extrémité est raccordée à une source lumineuse extérieure à la platine et dont l'autre extrémité est conjuguée optiquement de la pupille d'entrée de l'objectif de microscope, ainsi qu'une lame semi-transparente réfléchissant, en direction de la lame dichroïque traversée par le faisceau laser, le faisceau lumineux sortant des fibres optiques.

La lame dichroïque de la voie de transmission du faisceau laser, qui est traversée par le faisceau laser et qui réfléchit le faisceau lumineux d'éclairage, sert donc d'interface entre les voies de transmission du faisceau laser et d'éclairage.

Avantageusement, la lame semi-transparente précitée est placée à l'entrée de la voie d'observation et est traversée par le faisceau lumineux réfléchi par l'objet et dirigé vers la caméra matricielle C.C.D. de la voie d'observation.

L'invention prévoit également que l'objet à traîter est monté sur un support associé à des moyens de déplacement dans trois directions perpendiculaires, dont deux sont parallèles à la platine, et que le support de l'objet est mobile en rotation autour de son axe de déplacement perpendiculaire à la platine.

Selon un mode de réalisation préféré de l'invention, des moteurs électriques pas à pas assurent le déplacement du support de l'objet dans les deux directions parallèles à la platine tandis que les moyens de déplacement du support dans la troisième direction comprennent des moyens de réglage manuel, ainsi que des moteurs piézoélectriques assurant un réglage fin de la position de l'objet à traîter.

Ces différents moyens moteur peuvent être commandés automatiquement par un microprocesseur, dans le cas d'interventions répétitives sur des objets identiques.

L'invention sera mieux comprise et d'autres détails, caractéristiques et avantages de celle-ci apparaîtront au cours de la desoription qui va suivre, faite à titre d'exemple en référénce aux dessins annexés et dans lesquels:

- la figure 1 est une vue schématique d'une machine selon l'invention;
- la figure 2 est une vue schématique partielle en perspective de cette machine;
- la figure 3 est une vue en plan de la platine optique de la machine;
- la figure 4 est une vue schématique en coupe partielle, selon la ligne IV-IV de la figure 3.

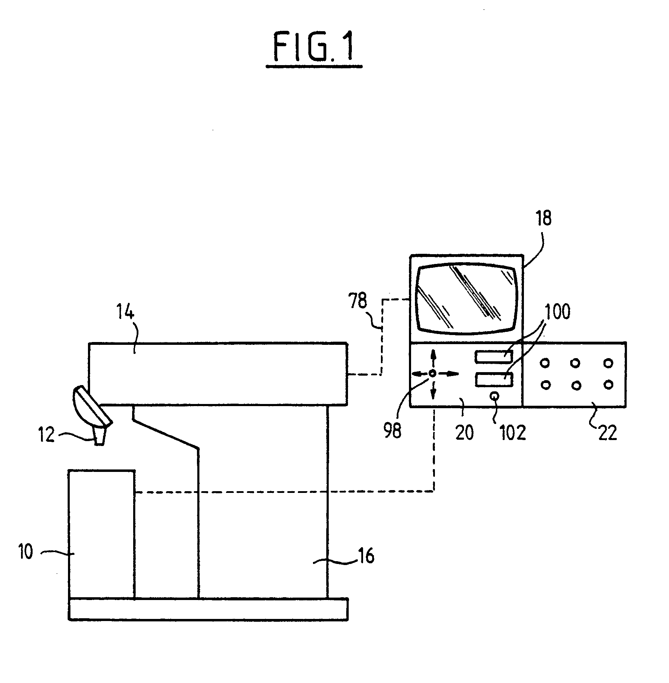

Comme on le voit schématiquement en figure 1, la machine selon l'invention comprend un support 10 d'un objet à traîter, par exemple un circuit intégré, vers lequel est orienté l'objectif 12 d'un microscope porté par une platine 14 rigide, indéformable et insensible aux vibrations, qui est par exemple horizontale et est supportée par un bâti métallique 16, un écran de visualisation 18 relié à la sortie de la voie d'observation portée par la platine 14, un tableau de commande 20 pour le réglage de la focalisation du faisceau laser sur l'objet à traîter et des déplacements du support de l'objet, et un tableau de commande 22 comprenant divers moyens de commande et de réglage du laser.

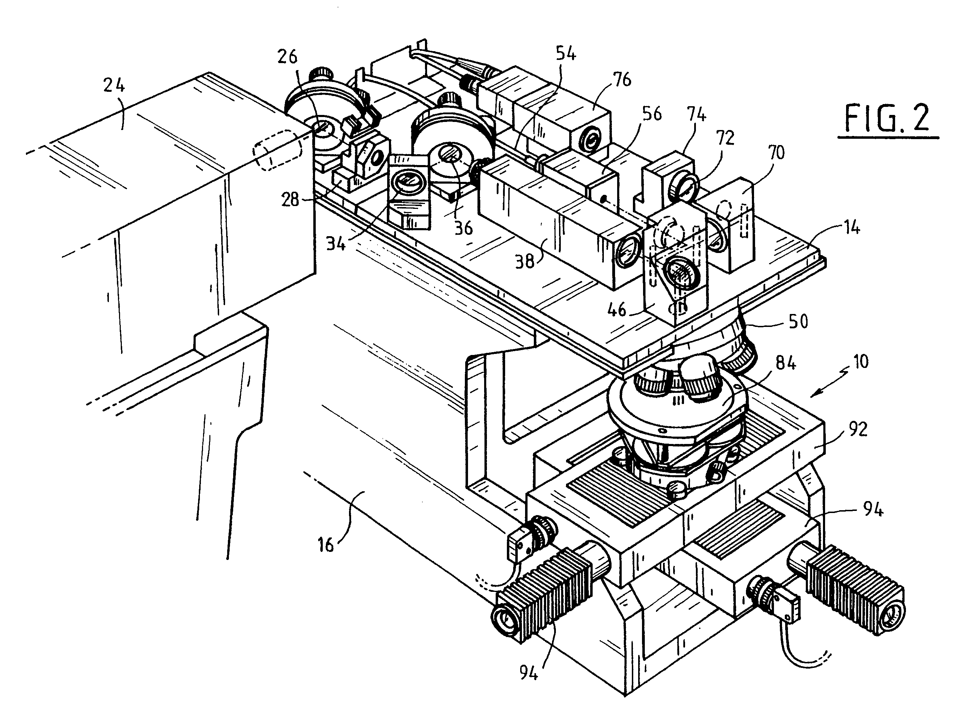

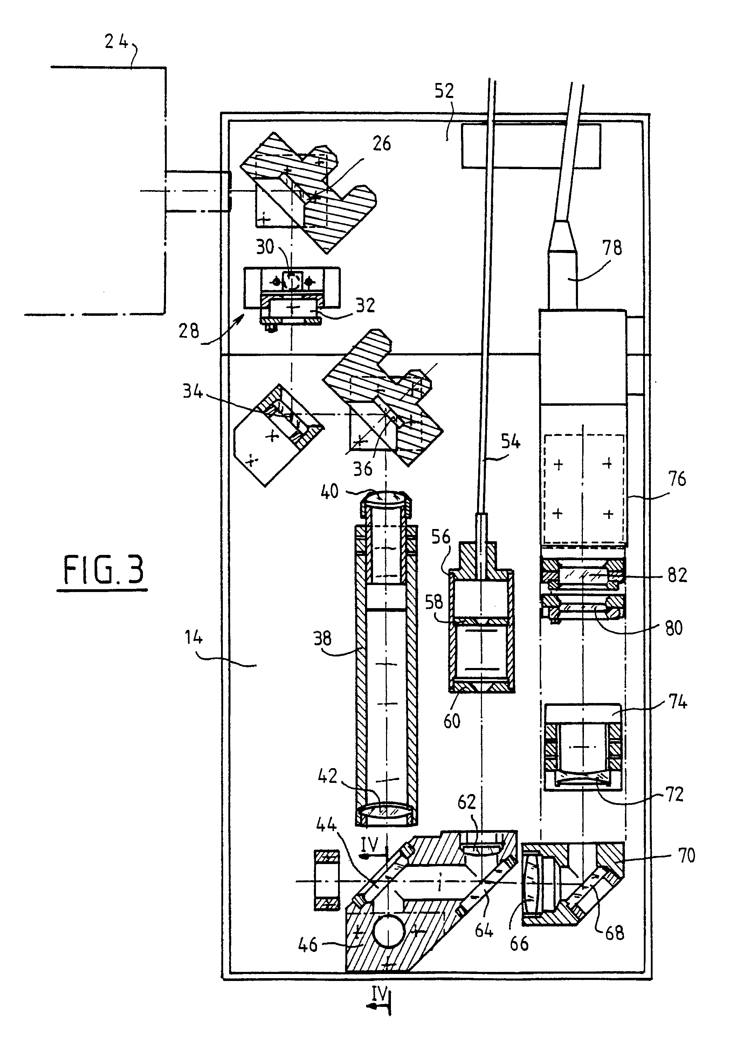

Le laser 24, dont seule une partie est représentée dans les figures 2 et 3 est un laser continu à Argon, ayant une puissance optique multiraies de l'ordre de plusieurs Watts et une bande spectrale de 450 à 525 nm environ.

Le faisceau laser émis rencontre un premier miroir de renvoi 26 qui réfléchit le faisceau laser à angle droit vers un isolateur optique 28 comprenant un cube polarisant 30 et une lame quart d'onde 32 qui empêche la réinjection de l'énergie laser dans la cavité de sortie du laser 24 lors du passage du point d'impact du faisceau laser sur une partie très réfléchissante, telle que de l'aluminium, de la surface de l'objet à traîter. On évite ainsi une déstabilisation du laser 24.

A la sortie de l'isolateur optique 28, le faisceau laser rencontre un autre miroir de renvoi 34 fixe, qui réfléchit le faisceau laser à angle droit vers un miroir de renvoi 36 refléchissant le faisceau laser à angle droit vers un dispositif afocal de grandissement 38 comprenant un lentille d'entrée 40 mobile en translation pour la focalisation du faisceau laser et une lentille de sortie 42. Ce dispositif 38 assure un expansion du faisceau laser avec un rapport de grandissement linéaire de l'ordre de trois par exemple, qui est compatible avec le diamètre de la pupille d'entrée de l'objectif 12 de microscope. Ainsi, le faisceau laser a un diamètre, à la sortie du dispositif 38, qui correspond sensiblement à celui de la pupille d'entrée de l'objectif 12, de façon à ce que le faisceau laser ne soit pas diaphragmé par l'objectif 12, ce qui se traduirait par une perte d'énergie, et ne soit pas concentré sur une zone étroite de la pupille d'entrée du microscope, ce qui se traduirait par des risques de destruction des lentilles.

Par ailleurs, ce dispositif afocal de grandissement 38 permet également de compenser la divergence du faisceau laser pour travailler en lumière parallèle.

Le faisceau laser parallèle sortant du dispositif 38 traverse une lame dichroïque 44 orientée à 45° et portée par un bloc 46 sur lequel est monté un miroir de renvoi 48 réfléchissant le faisceau laser à angle droit sur la pupille d'entrée de l'objectif 12 de microscope, qui est orienté vers le support 10 de l'objet à traîter. L'objectif 12 de microscope est porté par une tourelle rotative 50 comprenant plusieurs objectifs ayant des grandissements différents.

Comme indiqué dans ce qui précède, le miroir de renvoi 26 est conjugué optiquement de la surface de l'objet à traîter et permet, par deux rotations angulaires, le renvoi du faisceau laser et le réglage de son impact au centre de la pupille d'entrée de l'objectif 12 de microscope tandis que le miroir de renvoi 36 est conjugué optiquement, par l'intermédiaire du dispositif 38, de la pupille d'entrée de l'objectif de microscope 12, de sorte que son réglage n'influence pas la position de l'impact du faisceau laser par rapport au centre de la pupille d'entrée de l'objectif 12, mais uniquement la position du point d'impact du faisceau laser focalisé sur l'objet à traîter. Ces deux réglages sont donc rendus indépendants. En outre, le miroir 36 peut être associé à des moyens de motorisation, lorsqu'il est nécessaire de réaliser un balayage du point d'impact du faisceau laser sur la surface de l'objet à traîter.

De préférence, le premier miroir de renvoi 26 et l'isolateur optique 28 sont portés par une plaque 52 qui n'est pas solidaire de la platine 14 portant les miroirs de renvoi 34 et 36, le dispositif afocal 38 et le bloc 46 sur lequel est montée la tourelle 50 portant les objectifs du microscope. Le microscope peut ainsi être rendu mobile par rapport au laser. La platine 14 est associée à des dispositifs amortisseurs filtrant les vibrations susceptibles d'être transmises à la platine, par exemple les vibrations provoquées par le circuit d'eau de refroidissement du laser 24.

Les différents moyens optiques précités constituent la voie de transmission du faisceau laser sur la platine 14.

Celle-ci porte également une voie d'éclairage comprenant un faisceau 54 de fibres optiques dont une extrémité est raccordée à une source d'éclairage d'un type quelconque, par exemple une lampe à incandescence, extérieure à la platine 14 et à la plaque 52, et dont l'autre extrémité est raccordée à un dispositif 56 monté sur la platine 14 et comportant une plaque 58 présentant un orifice central de passage du faisceau lumineux sortant des fibres optiques 56, pour limiter la lumière parasite, et un diaphragme de champ 60 qui est conjugué optiquement avec la surface de l'objet à traîter.

Le faisceau lumineux diaphragmé sortant du dispositif 56 traverse tout d'abord un doublet optique 62 porté par le bloc 46 précité, puis est réfléchi à angle droit sur une lame semi-transparente 64 en direction de la lame dichroïque 44, et est finalement réfléchi par cette lame 44 sur le miroir de renvoi 48 précité.

L'extrémité du faisceau de fibres optiques 54, le dispositif 56, le doublet 62, la lame semi-transparente 64, la lame dichroïque 44 et le miroir de renvoi 48 associé à l'objectif 12 de microscope constituent la voie d'éclairage, portée par la platine 14, de l'objet à traîter.

Une voie d'observation, indépendante des deux voies précédentes, est prévue sur la platine 14 et comprend, outre l'objectif 12 de microscope, le miroir 48 et la lame dichroïque 44, la lame semi-transparente 64 que est traversée par le faisceau lumineux, un téléobjectif compact comprenant des lentilles 66 convergentes et un miroir de renvoi 68 porté par un bloc 70 et des lentilles 72 divergentes portées par un autre bloc 74 orienté vers l'objectif d'entrée d'une caméra matricielle C.C.D. 76 (à transfert de charge) fixée sur la platine 14 et dont la sortie 78 est reliée à l'écran de visualisation 18.

Des filtres optiques 80 et 82 sont interposés entre l'entrée de la caméra 76 et la sortie du téléobjectif, pour atténuer l'image de l'impact du faisceau laser sur l'objet à traîter et permettre de visualiser par la caméra 76 et l'écran 18 aussi bien la surface de l'objet à traîter que l'impact du faisceau laser sur cette surface.

Un prisme peut également être placé sur la voie de visualisation de la platine 14 entre le filtre optique 80 et la sortie du téléobjectif, pour modifier sur l'écran de visualisation 18 le sens de déplacement de l'image.

Les différents composants optiques portés par la platine 14 sont montés de façon amovible sur celle-ci par des vis et sont associés à des moyens de positionnement mécanique très précis, par exemple des pions portés par la platine 14 et reçus dans des cavités des supports des composants, pour permettre le démontage de ces composants et leur remplacement sans qu'il soit nécessaire de procéder à des nouveaux réglages optiques. La voie d'éclairage portée par la platine 14 présente l'avantage d'un encombrement réduit. La source de lumière d'éclairage est extérieure à la platine 14, n'influence pas thermiquement les composants optiques montés sur cette platine, et peut être changée sans qu'il soit nécessaire de procéder à des nouveaux réglages. On obtient également ainsi un éclairage uniforme de tout le champ d'observation sur la surface de l'objet à traiter.

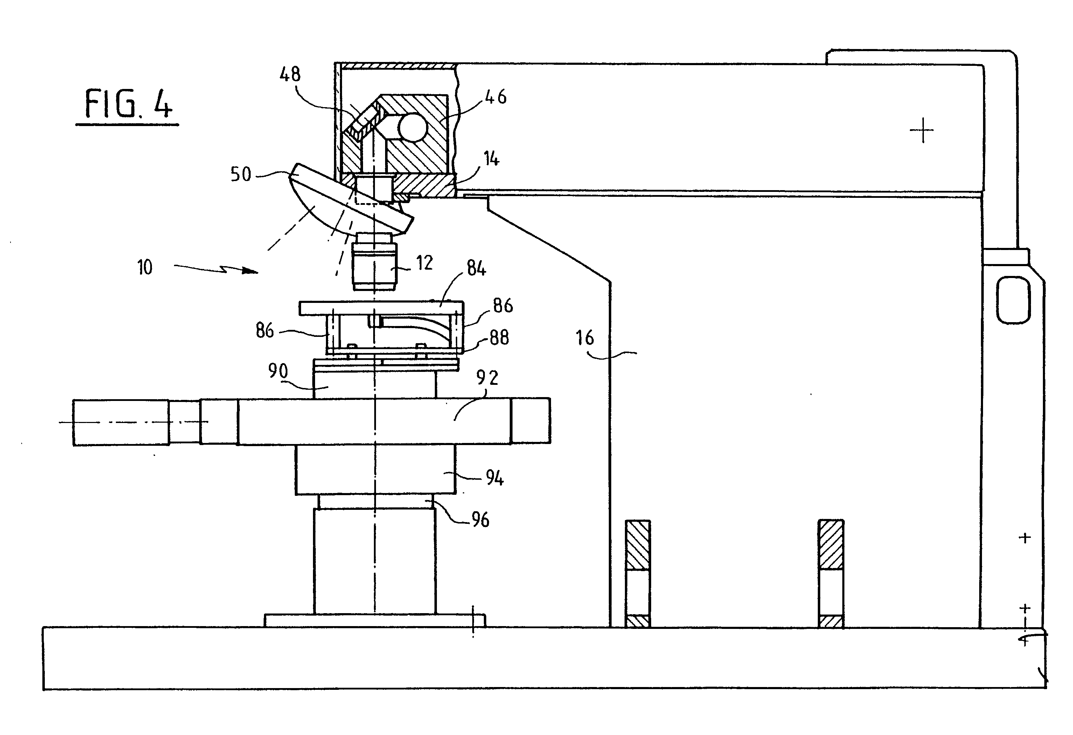

Le support 10 de l'objet à traiter comprend (figures 2 et 4) une plaque supérieure 84 sur laquelle l'objet à traiter est fixé par dépression.

Cette plaque supérieure 84 est reliée par des montants verticaux 86 à une plaque inférieure 88 associée à des moteurs piézoélectriques permettant un réglage fin de focalisation par déplacement vertical des plaques 88 et 84, par exemple sur une course de 100 microns avec une précision de 0,1 micron.

L'ensemble des plaques 84 et 88 est porté par une couronne 90 rotative autour de l'axe vertical, par commande manuelle ou motorisée, pour permettre d'orienter la surface de l'objet à traiter par rapport à deux axes de déplacement horizontaux perpendiculaires. La couronne 90 est elle-même portée par une première table 92, déplacable le long d'un axe horizontal par un moteur électrique pas à pas, et cette table 92 est elle-même portée par une table 94 déplacable en translation le long d'un axe horizontal perpendiculaire au premier par un autre moteur électrique pas à pas. Ces deux moteurs ont par exemple une course de 100 ou 150 mm, avec un déplacement minimal de 0,1 micromètre.

L'ensemble des tables 92 et 94 est porté par une colonne 96 déplacable verticalement par commande manuelle, pour un réglage grossier de focalisation, avec une précision de 1 micromètre sur une course de 12 à 15 mm environ.

Les moteurs électriques pas à pas de déplacement des tables 92 et 94 peuvent être commandées à partir du tableau 20 (figure 1) par exemple au moyen d'un levier à rotule 98, déplacable dans deux directions perpendiculaires correspondant aux deux directions de déplacement des tables 92 et 94. Le tableau 20 comprend également des moyens 100 d'affichage des coordonnées sur ces deux axes d'un point de la surface de l'objet à traiter, et un bouton rotatif 102 de commande des moteurs piézoélectriques de réglage fin de focalisation.

La machine selon l'invention fonctionne de la façon suivante.

L'objet à traiter est placé sur la plaque supérieure 84 du support 10 et est maintenu en position par dépression, ce qui permet entre autres de corriger au moins partiellement les défauts de planéité des supports de couches minces. Par rotation de la tourelle 50, on sélectionne un objectif 12 ayant un grossissement approprié à l'intervention envisagée.

Le fonctionnement de la voie d'éclairage et de la voie d'observation permet de rechercher, sur l'écran de visualisation 18, la zone particulière à traiter sur la surface de l'objet. Lorsque l'objectif 12 de microscope a un grossissement de 50, la diagonale du champ d'observation sur la surface de l'objet à traiter est de 135 micromètres, tandis que le rapport de grandissement de l'image sur l'écran de visualisation 18 est de 2 000.

Un réticule 20 peut être prévu sur la voie d'éclairage, en étant légèrement défocalisé, de façon à matérialiser l'axe optique sur l'image tout en permettant de visualiser ce qui se trouver derrière le réticule. Lorsque l'axe optique est correctement positionné sur la surface de l'objet à traiter, par exemple au bord d'une couche mince à découper, le laser 24 est mis en route et produit un faisceau laser à un niveau de puissance relativement élevée (de l'ordre de 1 à 2 Watts) pendant une durée limitée de l'ordre d'une seconde par exemple, pour amorcer une réaction thermochimique entre la couche mince à découper et la couche sous-jacente. On réduit ensuite la puissance du faisceau laser et, par commande du moteur électrique de déplacement d'une table 92 ou 94, on déplace le point d'impact du faisceau laser pour réaliser la découpe voulue.

Le diamètre du point d'impact du faisceau laser sur la surface de l'objet à traiter est, avec un objectif de grossissement 50, de l'ordre de 1 micromètre au maximum. La profondeur de champ est de l'ordre de plus ou moins 0,5 micromètre, la distance libre de travail entre l'extrémité de l'objectif 12 et la surface de l'objet à traiter étant de l'ordre de 8 mm.

On peut également utiliser un objectif de microscope ayant un grossissement supérieur, par exemple de 100. Dans ce cas, le diamètre du faisceau laser focalisé est inférieur à 1 micromètre, la profondeur de champ est de plus ou moins 0,2 micromètre et la distance libre de travail entre l'extrémité de l'objectif et la surface de l'objet à traîter de l'ordre de 0,3 mm. Le rapport d'agrandissement de l'image sur l'écran de visualisation 18 est de l'ordre de 4 000.

La machine selon l'invention peut donc réaliser une découpe fine des connections de liaison sur un circuit intégré, par exemple pour la correction de microdéfauts ou de court-circuits. Elle peut également réaliser la découpe d'une couche de métallisation autour d'un trou de contact et elle permet également une détection et une localisation des points sensibles d'un circuit alimenté au voisinage de sa tension marginale, par balayage par un faisceau laser. L'excitation des points critiques du circuit peut provoquer des erreurs logiques détectables, ce qui permet de localiser ces points sensibles.

Cette machine permet également des interventions en microchimie, au moyen de réactions locales induites par le faisceau laser.

Dans l'exemple de réalisation qui a été décrit, la platine 14 portant l'essentiel des composants optiques de la machine est fixe, tandis que le support de l'objet à traîter est mobile. On peut cependant rendre cette platine mobile si nécessaire.

Pour les tâches répétitives, un microprocesseur peut être couplé à la machine pour commander automatiquement, selon des séquences prédéterminées, les déplacements de l'objet à traîter par rapport à l'objectif de microscope sélectionné et régler le niveau de puissance du laser. Un dispositif de focalisation automatique, d'un type classique, peut aussi être utilisé pour régler en continu la focalisation du faisceau laser sur la surface de l'objet à traîter et corriger ainsi des défauts de focalisation causés par exemple par les déplacements de l'objet à traîter, des défauts de planéité de sa surface, etc....

## Revendications

1. Machine à microfaisceau laser d'intervention sur des objets à couches minces de matériau, tels que· des circuits intégrés, par exemple pour la découpe de ces couches minces, comprenant un laser (24), une voie optique de transmission du faisceau laser vers l'objet, une voie optique d'éclairage de l'objet et une voie d'observation de l'objet, menant à des moyens électroniques de visualisation (76, 18), ces trois voies optiques étant réunies entre elles en amont de l'objet, caractérisée en ce que le laser (24) est un laser continu associé à des moyens (22) de commande et de réglage de puissance pour découper, avec une précision de l'ordre du micromètre, une couche mince par réaction thermochimique avec une couche sous jacente et en ce que la machine comprend une platine (14) rigide, indéformable et insensible aux vibrations, placée à la sortie du laser (24) et sur laquelle sont fixés les composants optiques définissant les trois voies optiques précitées et comportant des moyens indépendants de réglage, ainsi qu'un objectif de microscope (12) par lequel passent ces trois voies, celles-ci étant réunies entre elles à l'entrée du microscope par une lame dichroïque (44) permettant une observation continue de l'action du faisceau laser sur l'objet.

2. Machine selon la revendication 1, caractérisée en ce que la platine (14) comprend des moyens mécaniques de positionnement précis des composants optiques, permettant de les démonter et de les remplacer sans modification des réglages optiques.

3. Machine selon la revendication 1 ou 2, caractérisée en ce que la voie d'observation sur la platine (14) comprend une caméra matricielle (76) du type C.C.D. dont la sortie est reliée à un écran de visualisation (18) indépendant de la platine (14) et dont l'entrée est reliée à l'objectif de microscope (12) par des filtres (80, 82) d'atténuation de l'image du point d'impact du faisceau laser, et par des moyens optiques (66, 72) d'agrandissement de l'image.

4. Machine selon la revendication 1, 2 ou 3, caractérisée en ce que la voie de transmission du faisceau laser comprend un premier miroir de renvoi (36) suivi d'un dispositif optique afocal (38) de grandissement du faisceau laser, ladite lame dichroïque (44) traversée par le faisceau laser et un miroir (48) de renvoi vers l'objectif de microscope (12).

5. Machine selon la revendication 4, caractérisée en ce que le premier miroir de renvoi (36) est conjugué optiquement d'une pupille d'entrée de l'objectif de microscope (12).

6. Machine selon la revendication 4 ou 5, caractérisée en ce que le premier miroir de renvoi (36) est motorisé pour assurer par exemple un balayage du point d'impact du faisceau laser sur l'objet.

7. Machine selon l'une des revendications 4 à 6, caractérisée en ce que la voie de transmission est reliée à la sortie du laser par un autre miroir de renvoi (26) et par un isolateur optique (28) empêchant une réinjection du faisceau laser vers le laser.

8. Machine selon la revendication 7, caractérisée en ce que ledit autre miroir de renvoi (26) est conjugué optiquement de la zone visée de l'objet, et permet le réglage du point d'impact du faisceau laser au centre d'une pupille d'entrée du microscope.

9. Machine selon la revendication 7 ou 8, caractérisée en ce que cet autre miroir de renvoi (26) et l'isolateur optique (28) sont montés sur une plaque non solidaire de la platine (14) précitée.

10. Machine selon l'une des revendications 1 à 9, caractérisée en ce que la voie d'éclairage portée par la platine (14) comprend un faisceau de fibres optiques (54) dont une extrémité est raccordée à une source lumineuse extérieure à la platine et dont l'autre extrémité est conjuguée optiquement d'une pupille d'entrée de l'objectif de microscope (12) et une lame semi-transparente (64) réfléchissant, en direction de la lame dichroïque (44) traversée par le faisceau laser, le faisceau lumineux sortant des fibres optiques.

11. Machine selon la revendication 10, caractérisée en ce que la lame semi-transparente (64) est placée à l'entrée de la voie d'observation et est traversée par le faisceau lumineux réfléchi, dirigé vers les moyens électroniques de visualisation.

12. Machine selon l'une des revendications précédentes, caractérisée en ce que l'objet est monté sur un support (10) comprenant des moyens de déplacement dans trois directions perpendiculaires, dont deux sont parallèles à la platine (14).

13. Machine selon la revendication 12, caractérisée en ce que le support (10) de l'objet est mobile en rotation autour de la direction de déplacement perpendiculaire à la platine (14).

14. Machine selon la revendication 12 ou 13, caractérisée en ce que des moteurs électriques pas à pas assurent le déplacement du support de l'objet dans les deux directions parallèles à la platine (14).

15. Machine selon l'une des revendications 12 à 14, caractérisée en ce que les moyens de déplacement du support de l'objet dans la direction perpendiculaire à la platine comprennent des moyens (96) de réglage manuel et des moteurs piézoélectriques assurant un réglage fin de position.

16. Machine selon l'une des revendications 1 à 15, caractérisée en ce qu'elle comprend des tableaux (20, 22) de commande de déplacement de l'objet à traiter, de visualisation des déplacements commandés, et de commande de fonctionnement du laser.

**Claims**

1. A microbeam laser machine for acting on objects having thin layers of material, e.g. integrated circuits, for example for cutting said layers, the machine comprising a laser (24), an optical path for transmitting the laser beam towards the object, an optical path for illuminating the object, and a path for observing the object leading to electronic display means (76, 18), these three optical paths being interconnected upstream from the object, said machine being characterized in that the laser (24) is a continuous laser associated with power regulation and control means (22) for cutting a thin layer by thermochemical reaction with a subjacent layer with a precision of the order of a micrometer, and also characterized in that it comprises a platen (14) which is rigid, undeformable, and insensitive to vibration, said platen being placed at the outlet from the laser (24) and having fixed thereon the optical components for defining said three optical paths which include independent adjustment means, as well as a microscope objective lens (12) through which these three paths pass, the paths being interconnected at the microscope input by a dichroic plate (44) which allows the action of the laser beam on the object to be continuously observed.

2. A machine according to claim 1, characterized in that the platen (14) includes mechanical means for accurately positioning the optical components, enabling the components to be removed and replaced without changing the optical adjustments.

3. A machine according to claim 1 or 2, characterized in that the observation path on the platen (14) comprises a C.C.D. type matrix camera (76) whose output is connected to a display screen (18) which is independent from the platen (14) and whose inlet is connected to the microscope objective lens (12) via filters (80, 82) for attenuating the image of the point of impact of the laser beam, and via optical means (66, 72) for magnifying the image.

4. A machine according to any one of claims 1, 2 or 3, characterized in that the laser beam transmission path comprises a first reflector (36) followed by an afocal optical device (38) for magnifying the laser beam, a dichroic plate (44) through which the laser beam passes, and serving to separate the laser beam transmission path from the illumination path and the observation path, and a reflector (48) leading to the microscope objective lens (12).

5. A machine according to claim 4, characterized in that the first reflector (36) is optically conjugated with the entrance pupil to the microscope objective lens (12).

6. A machine according to claim 4 or 5, characterized in that the first reflector (36) is motorized, for example to scan the point of impact of the laser beam over the object.

7. A machine according to any one of claims 4 to 6, characterized in that the transmission path is connected to the outlet from the laser by another reflector (26) and by an optical isolator (28) for preventing the laser beam from being reinjected back into the laser.

8. A machine according to claim 7, characterized in that said other reflector (26) is optically conjugated with the target zone on the object, thereby enabling the point of impact of the laser beam to be adjusted to the center of the inlet pupil of the microscope.

9. A machine according to claim 7 or 8, characterized in that said other reflector (26) and the optical isolator (28) are mounted on a plate which is not fixed to said platen (14).

10. A machine according to any one of claims 1 to 9, characterized in that the illumination path on the platen (14) comprises a bundle of optical fibers (54) having one end connected to a light source which is external to the platen and having its other end optically conjugated with the entrance pupil of the microscope objective lens (12), and a semi-transparent plate (64) serving to reflect the light beam leaving the optical fibers towards the dichroic plate (44) through which the laser beam passes.

11. A machine according to claim 10, characterized in that the semi-transparent plate (64) is placed at the entrance to the observation path and has the reflected light beam passing therethrough which is directed towards the electronic display means.

12. A machine according to any preceding claim, characterized in that the object is mounted on a support (10) having means for displacement in three perpendicular directions, two of which are parallel to the platen (14).

13. A machine according to claim 12, characterized in that the object support (10) is rotatable about the displacement axis which is perpendicular to the platen (14).

14. A machine according to claim 12 or 13, characterized in that electric stepper motors are used to displace the object support in two directions parallel to the platen (14).

15. A machine according to any one of claims 12 to 14, characterized in that the means for displacing the object support in the direction perpendicular to the platen comprise manual adjustment means (96) and piezoelectric motors for fine position adjustment.

16. A machine according to any one of claims 1 to 15, characterized in that it includes panels (20, 22) for controlling displacement of the objects to be treated, for displaying the controlled displacements, and for controlling laser operations.

## Patentansprüche

1. Mikrolaserstrahleinrichtung zum Einwirken auf Objekte mit dünnen Materialschichten wie integrierte Schaltungen, beispielsweise zum Schneiden dieser dünnen Schichten, die aufweist: einen Laser (24), einen optischen Übertragungskanal für den Laserstrahl zu dem Objekt, einen optischen Beleuchtungskanal für das Objekt und einen Beobachtungskanal für das Objekt, der zu elektronischen Anzeigemitteln (76, 18) führt, wobei diese drei optischen Kanäle stromauf des Objekts miteinander vereinigt sind, dadurch gekennzeichnet, daß der Laser (24) ein Dauerstrichlaser ist, der Mitteln (22) zum Steuern und zum Einstellen von Leistung zugeordnet ist, um mit einer Genauigkeit der Ordnung Mikrometer eine Dünnschicht durch eine thermochemische Reaktion mit einer darunterliegenden Schicht zu schneiden und daß die Einrichtung eine starre unverformbare und gegenüber Vibrationen unempfindliche Tragplatte (14) aufweist, die an dem Ausgang des Lasers (24) angebracht ist und auf welcher die optischen Komponenten befestigt sind, welche die drei optischen Kanäle definieren und aus unabhängigen Mitteln zum Einstellen, wie einem Mikroskopobjektiv (12) bestehen, durch das diese drei Kanäle führen, wobei diese durch ein dichroisches Plättchen (44) an dem Eingang des Mikroskops miteinander vereinigt sind, wodurch ein kontinuierliches Beobachten der Wirkung des Laserstrahls auf das Objekt ermöglicht ist.

2. Einrichtung nach Anspruch 1, dadurch gekennzeichnet, daß die Tragplatte (14) mechanische Mittel zum genauen Anbringen der optischen Komponenten aufweist, die es ermöglichen, sie zu entfernen und sie ohne eine Änderung der optischen Einstellungen zu ersetzen.

3. Einrichtung nach Anspruch 1 oder 2, dadurch gekennzeichnet, daß der Beobachtungskanal auf der Tragplatte (14) eine Matrizenkamera (76) der CCD-Art aufweist, deren Ausgang mit einem von der Tragplatte (14) unabhängigen Bildschirm (18) verbunden ist und deren Eingang mit dem Mikroskopobjektiv (12) durch Abschwächungsfilter (80, 82) für das Bild des Auftreffpunktes des Laserstrahls und durch optische Mittel (66, 72) zum Vergrößern des Bildes verbunden ist.

4. Einrichtung nach Anspruch 1, 2 oder 3, dadurch gekennzeichnet, daß der Übertragungskanal für den Laserstrahl einen ersten Reflexionsspiegel (36), dem eine brennpunktlose optische Einrichtung (38) zum Vergrößern des Laserstrahls folgt, das dichroistische Plättchen (44), das von dem Laserstrahl durchquert wird, und einen Reflexionsspiegel (48) zu dem Mikroskopobjektiv (12) aufweist.

5. Einrichtung nach Anspruch 4, dadurch gekennzeichnet, daß der erste Reflexionsspiegel (36) einer Eintrittspupille des Mikroskopobjektivs (12) optisch zugeordnet ist.

6. Einrichtung nach Anspruch 4 oder 5, dadurch gekennzeichnet, daß der erste Reflexionsspiegel (36) mit einem Motor versehen ist, um beispielsweise ein Abtasten mit dem Auftreffpunkt des Laserstrahls auf dem Objekt zu gewährleisten.

7. Einrichtung nach einem der Ansprüche 4 bis 6, dadurch gekennzeichnet, daß der Übertragungskanal mit dem Ausgang des Lasers durch einen anderen Reflexionsspiegel (26) und durch eine optische Einwegleitung (28) verbunden ist, die eine Rückführung des Laserstrahls zu dem Laser verhindert.

8. Einrichtung nach Anspruch 7, dadurch gekennzeichnet, daß der andere Reflexionsspiegel (26) dem Beobachtungsbereich des Objekts optisch zugeordnet ist und das Einstellen des Auftreffpunktes des Laserstrahls in dem Zentrum einer Eintrittspupille des Mikroskops ermöglicht.

9. Einrichtung nach Anspruch 7 oder 8, dadurch gekennzeichnet, daß dieser andere Reflexionsspiegel (26) und die optische Einwegleitung (28) auf einer Platte angebracht sind, die mit der Tragplatte (14) nicht verbunden ist.

10. Einrichtung nach einem der Ansprüche 1 bis 9, dadurch gekennzeichnet, daß der von der Tragplatte (14) getragene Beleuchtungskanal ein Bündel von Lichtleitfasern (54) aufweist, dessen eines Ende mit einer Lichtquelle außerhalb der Tragplatte verbunden ist und dessen anderes Ende einer Eintrittspupille des Mikroskopobjektivs (12) und einem halbdurchlässigen Plättchen (64) optisch zugeordnet ist, das in Richtung des dichroistischen, von dem Laserstrahl durchquerten Plättchens (44) das aus den Lichtleitfasern tretende Lichtbündel reflektiert.

11. Einrichtung nach Anspruch 10, dadurch gekennzeichnet, daß das halbdurchlässige Plättchen (64) an dem Eingang des Beobachtungskanals angebracht ist und von dem reflektierten, zu den elektronischen Anzeigemitteln gerichteten Lichtbündel durchquert ist.

12. Einrichtung nach einem der vorigen Ansprüche, dadurch gekennzeichnet, daß das Objekt auf einem Träger (10) angebracht ist, der Mittel zum Verschieben in drei zueinander senkrechte Richtungen aufweist, von welchen zwei parallel zu der Tragplatte (14) liegen.

13. Einrichtung nach Anspruch 12, dadurch gekennzeichnet, daß der Träger (10) des Objektes drehbar um die zu der Tragplatte (14) senkrechte Verschiebungsrichtung beweglich ist.

14. Einrichtung nach Anspruch 12 oder 13, dadurch gekennzeichnet, daß Elektromotoren das Verschieben des Trägers des Objekts in die zwei zu der Tragplatte (14) parallele Richtungen schrittweise gewährleisten.

15. Einrichtung nach einem der Ansprüche 12 bis 14, dadurch gekennzeichnet, daß die Mittel zum Verschieben des Trägers des Objekts in die zu der Tragplatte senkrechte Richtung Mittel (96) zum manuellen Einstellen und piezoelektrische Motore aufweisen, die ein Feineinstellen einer Position gewährleisten.

**16.** Einrichtung nach einem der Ansprüche 1 bis 15, dadurch gekennzeichnet, daß sie Bedienungstafeln (20, 22) für das Steuern einer Verschiebung des zu behandelnden Objekts, für die Anzeige der gesteuerten Verschiebungen und für die Funktionssteuerung des Lasers aufweist.

# FIG.1

FIG.2

FIG.3

FIG. 4